(19) **Europäisches Patentamt**

**European Patent Office**

**Office européen des brevets**

(11) **EP 1 271 679 A1**

(12) **EUROPEAN PATENT APPLICATION**
published in accordance with Art. 158(3) EPC

(43) Date of publication:
**02.01.2003 Bulletin 2003/01**

(51) Int Cl.⁷: **H01M 8/04**, H01M 8/06,
C01B 3/38

(21) Application number: **01915753.6**

(22) Date of filing: **23.03.2001**

(86) International application number:
**PCT/JP01/02375**

(87) International publication number:
**WO 01/073878 (04.10.2001 Gazette 2001/40)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.03.2000 JP 2000087996**
**04.08.2000 JP 2000236766**

(71) Applicant: **MATSUSHITA ELECTRIC INDUSTRIAL
CO., LTD.**
**Kadoma-shi, Osaka 571-8501 (JP)**

(72) Inventors:
• **FUJII, Yasuhiro**
**Tokuyama-shi, Yamaguchi 745-0802 (JP)**
• **HOSAKA, Masato**
**Osaka-shi, Osaka 530-0043 (JP)**

• **TOMIZAWA, Takeshi**
**Ikoma-shi, Nara 630-0123 (JP)**
• **UKAI, Kunihiro**
**Ikoma-shi, Nara 630-0213 (JP)**
• **TAGUCHI, Kiyoshi**
**Moriguchi-shi, Osaka 570-0008 (JP)**
• **SHONO, Toshiyuki**
**Seikacho, Soraku-gun, Kyoto 619-0237 (JP)**
• **YOSHIDA, Yutaka**
**Nabari-shi, Mie 518-0746 (JP)**
• **KITAGAWA, Koichiro**
**Kadoma-shi, Osaka 571-0064 (JP)**

(74) Representative: **Böckelen, Rainer**
**Patentanwälte**
**Tiedtke-Bühling-Kinne & Partner**
**Bavariaring 4**
**80336 München (DE)**

(54) **DEVICE FOR PRODUCING HYDROGEN AND METHOD OF OPERATING THE SAME**

(57)    When a hydrogen producing apparatus is stopped, the flow rates of a hydrocarbon-type fuel feed-stock, water and an oxygen-containing oxidant gas are decreased respectively. A random decrease of the flow rates, however, invites a rapid increase in the temperature of a catalyst beyond the limit of thermal resistance, resulting in deactivation of the catalyst. Further, this poses a danger, for example, that the residual hydrocarbon-type fuel in the apparatus may be mixed with the oxidant gas after the stopping of the apparatus.

Thus, in stopping the operation, the present invention exerts such control as to decrease the flow rate of the hydrocarbon-type fuel and simultaneously increase the flow rate of water while maintaining the flow rate of the oxidant gas at a constant level, stop the hydrocarbon-type fuel, and thereafter stop the water and the oxidant gas.

FIG. 2

**Description**

Technical Field

The present invention relates to a hydrogen producing apparatus for use in a fuel cell power generation system that generates electric power by reacting oxygen with hydrogen obtained by reforming a hydrocarbon-type fuel and to an operating method thereof.

Background Art

Fuel cell power generation systems are expected to be highly efficient energy conversion systems for consumer use. A representative fuel cell power generation system has a hydrogen producing apparatus incorporated therein for producing hydrogen from an easily available hydrocarbon-type fuel such as natural gas, LPG, alcohol or kerosene by catalytic reaction. One of hydrogen production methods is an auto-thermal method in which a reformer having a catalyst charged therein is supplied with a hydrocarbon-type fuel, water and an oxygen-containing oxidant gas such as air to cause a steam reforming reaction of the hydrocarbon-type fuel and an oxidation reaction of the hydrocarbon to proceed simultaneously. As a result, hydrogen is produced mainly by the steam reforming reaction. Since the steam reforming reaction is an endothermic reaction which proceeds at high temperatures of about 700 °C or higher, the oxidation reaction, which is an exothermic reaction, is utilized to obtain necessary heat. The auto-thermal method is characterized in that it requires a relatively short time for starting up and stopping the apparatus. However, ensuring safety in frequent start-up and stopping is required in consumer products such as domestic cogeneration systems unlike power plants and other facilities to be operated steadily.

When the hydrogen producing apparatus is stopped, the flow rates of feedstock hydrocarbon-type fuel, water and oxidant gas are respectively decreased. A random decrease of these flow rates, however, will cause a problem that the temperature of a catalyst rises quickly beyond the limit of thermal resistance, resulting in deactivation of the catalyst. Another problem is that there is a danger, for example, that the residual hydrocarbon in the apparatus may be mixed with the oxidant gas after the stopping of the apparatus.

Also, the hydrocarbon-type fuel to be used as the feedstock for such a hydrogen producing apparatus contains small amounts of sulfur compounds. Thus, if such a feedstock is directly introduced to the reformer, it poisons the reforming catalyst, CO shift catalyst or the like, leading to performance deterioration. Therefore, as a method for removing the above-described sulfur compounds, there is proposed a method in which an oxide of transition metals such as zinc oxide, zeolite or the like is arranged upstream of the reforming catalyst for desulfurizing the sulfur compounds. There are a chemical desulfurization method and a physical adsorption method with regard to the desulfurization method. In a chemical desulfurization reaction using a metal oxide, the metal oxide needs to be retained at a high temperature of about 400 °C. Also, in desulfurization using a physical adsorbent such as zeolite, adsorption/replacement takes place due to steam contained in the feedstock gas or the like to cause elimination of sulfur compounds from the feedstock gas, possibly poisoning the catalyst positioned downstream. Further, in the case of using a zeolite-type adsorbent, the volume of the adsorbent relative to the desulfurizing capability is large in comparison with the chemical reaction desulfurization using zinc oxide or the like, and this becomes a problem in making the apparatus more compact. Therefore, it is desired to develop a method in which chemical desulfurization using a metal oxide is performed at a rear part of the reforming section or downstream of the reforming section using an existing heat source of the CO shifting section. Therefore, there is an urgent need to establish a reforming catalyst having durability with respect to sulfur compounds and catalyst operating conditions.

In view of the above points, an object of the present invention is to provide a hydrogen producing apparatus that is capable of decreasing the flow rates of feedstocks without inviting a rapid increase in catalyst temperature and is capable of stopping the apparatus without leaving a residual hydrocarbon-type fuel after the stopping.

Another object of the present invention is to provide a hydrogen producing apparatus that is capable of effective desulfurization downstream of a reformer.

Disclosure of Invention

The present invention is directed to a method of operating a hydrogen producing apparatus for a fuel cell power generation system, the apparatus producing a hydrogen-containing gas by catalytic reaction among feedstocks comprising at least a hydrocarbon-type fuel, water and an oxygen-containing oxidant gas, the method comprising, in stopping operation of the apparatus, the steps of: decreasing the flow rate of the hydrocarbon-type fuel and simultaneously increasing the flow rate of the water while maintaining the flow rate of the oxidant gas at a constant level; stopping the hydrocarbon-type fuel; and thereafter stopping the water and the oxidant gas.

The present invention relates to a hydrogen producing apparatus comprising: a reformer comprising a reforming catalyst layer, a pre-mixing chamber and a vaporizing chamber, each chamber being provided upstream of the reforming catalyst layer; a supply unit of a hydrocarbon-type fuel and a supply unit of an oxygen-containing oxidant gas, each unit having a flow rate adjusting device and being connected to the pre-mixing chamber; a supply unit of water having a flow rate adjusting device and being connected to the vaporizing chamber; and a control unit for controlling the respective flow rate adjusting devices, wherein in stopping operation of the apparatus, the control unit controls the respective flow rate adjusting devices in a procedure comprising the steps of: decreasing the flow rate of the hydrocarbon-type fuel and simultaneously increasing the flow rate of the water while maintaining the flow rate of the oxidant gas at a constant level; stopping supply of the hydrocarbon-type fuel; and thereafter stopping supply of the water and the oxidant gas.

In a preferable mode, the apparatus further comprises a temperature detector for detecting upstream temperature of the catalyst layer, wherein the control unit exerts such control, in stopping the operation of the apparatus, as to increase the rate of increase in the flow rate of the water when the temperature detected by the temperature detector does not decrease.

In another preferable mode of the present invention, the hydrogen producing apparatus further comprises a temperature detector for detecting upstream temperature of the catalyst layer, wherein the control unit exerts such control, in stopping the operation of the apparatus, as to increase the rate of increase in the flow rate of the water when the temperature detected by the temperature detector has reached a predetermined upper limit.

It is preferred that the upper limit be not less than 900 °C and not more than 1200 °C.

It is preferred that the reformer comprise a reforming catalyst layer comprising at least platinum and that a desulfurization unit comprising an oxide of at least one metal selected from the group consisting of V, Cr, Mn, Fe, Co, Ni, Cu and Zn be provided downstream of the reformer.

It is desirable that the reforming catalyst be supported on a carrier comprising at least one of zirconium oxide and aluminum oxide and that reforming reaction be operated while the temperature of the catalyst layer is held at 600 to 800 °C.

It is preferred that the desulfurization unit comprise a desulfurizing agent which is at least one selected from the group consisting of $V_2O_5$, $Cr_2O_3$, $MnO_2$, $Fe_2O_3$, $Co_2O_3$, NiO, CuO and ZnO.

Brief Description of Drawings

FIG. 1 is a structural diagram of a hydrogen producing apparatus in Embodiment 1 of the present invention.
FIG. 2 is a structural diagram of a hydrogen producing apparatus in Embodiment 2 of the present invention.
FIG. 3 is a chart showing changes with time in upstream temperature of catalyst layers of hydrogen producing apparatuses in an example of the present invention and comparative examples.

Best Mode for Carrying Out the Invention

In the following, embodiments of the present invention will be described with reference to drawings.

Embodiment 1

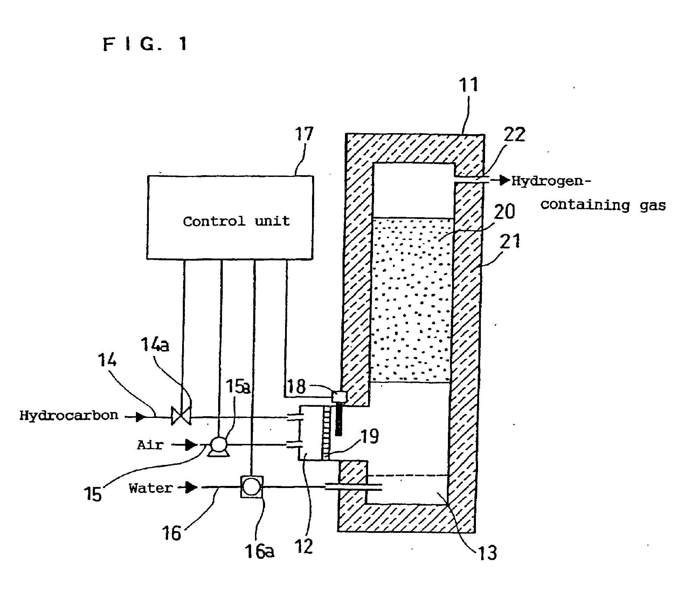

FIG. 1 shows the constitution of a hydrogen producing apparatus in one embodiment of the present invention. In FIG. 1, numeral 11 denotes a reformer which has a reforming catalyst charged therein and produces a hydrogen-containing gas by the reaction of the catalyst at high temperatures. The reformer 11 has, in the order of top to bottom, an outlet 22 of hydrogen-containing gas from which a hydrogen-containing gas produced is collected, a reforming catalyst layer 20 and a vaporizing chamber 13, and it also has a pre-mixing chamber 12 at its side face between the reforming catalyst layer 20 and the vaporizing chamber 13. The pre-mixing chamber 12 is connected to a supply conduit 14 of hydrocarbon and a supply conduit 15 of air serving as an oxidant gas and is a place where hydrocarbon and air supplied are mixed with each other. An igniter 18 composed of electric heater wires and a catalyst-preheating combustor 19 are used to heat the catalyst layer 20 and the vaporizing chamber 13 in starting up the apparatus. The hydrocarbon supply conduit 14 and the air supply conduit 15 are provided with a proportional valve 14a capable of adjusting the flow rate of hydrocarbon and a blower 15a capable of adjusting the flow rate of air, respectively. A water supply conduit 16 connected to the vaporizing chamber is provided with a pump 16a capable of adjusting the flow rate of water (the flow rate of steam). A control unit 17 is a controller comprising electric circuit which controls auxiliaries including the proportional valve 14a, blower 15a, pump 16a and igniter 18.

The main structure of the hydrogen producing apparatus is composed of stainless steel having thermal resistance, and the reformer 11 is composed of stainless steel of which outer walls are coated with a heat insulating material 21. The catalyst layer 20 is composed of activated particles of platinum group metal such as platinum, palladium, rhodium or ruthenium which are supported on a ceramic carrier. When the hydrogen producing apparatus of this embodiment is operated steadily, a mixed gas of hydrocarbon, air and steam is supplied to the catalyst layer 20 to cause a steam reforming reaction and an oxidation reaction to proceed, and a hydrogen-containing gas is collected from the outlet 22. The temperature of the catalyst layer is usually kept at 700 °C or higher.

The operating conditions of this apparatus will be described in the following. This embodiment uses methane which is a main component of natural gas used for city gas as a hydrocarbon feedstock. In starting up the apparatus, the proportional valve 14a and the blower 15a are controlled by the control unit such that the flow rate ratio of methane/air becomes approximately 1:10. For example, methane and air are supplied at 1 L/min and 10 L/min, respectively, and by actuating the igniter 18 comprising electric heater wires, the catalyst-preheating combustor 19 is operated to heat the catalyst layer 20 and the vaporizing chamber 13. After the catalyst layer has reached a predetermined temperature at which the reaction is to be commenced, a transition is made into a steady operation. In one example of the operating conditions using methane, the proportional valve 14a, the blower 15a and the pump 16a are controlled by the control unit 17 during the steady operation such that the flow rate ratio of methane/air/steam becomes 1:3:1. For example, methane, air and steam are supplied at 10 L/min, 30 L/min and 10 L/min, respectively. In this case, the upstream temperature of the catalyst layer becomes about 740 °C. The gas produced during the steady operation contains hydrogen, nitrogen, carbon monoxide and carbon dioxide in a ratio of 8:8:1:2 on a dry basis, and it further contains small amounts of residual methane and steam. The steady operation is a continuous operation of approximately several hours under constant conditions. In stopping the operation of the apparatus, the proportional valve 14a, the blower 15a and the pump 16a are controlled by the control unit 17 in such a manner as to gradually decrease the flow rate of methane and simultaneously gradually increase the flow rate of steam while maintaining the flow rate of air at a constant level, stop supply of hydrocarbon-type fuel, and thereafter stop supply of steam and air. Examples of the stopping method of the operation will be described with reference to comparative examples.

Embodiment 2

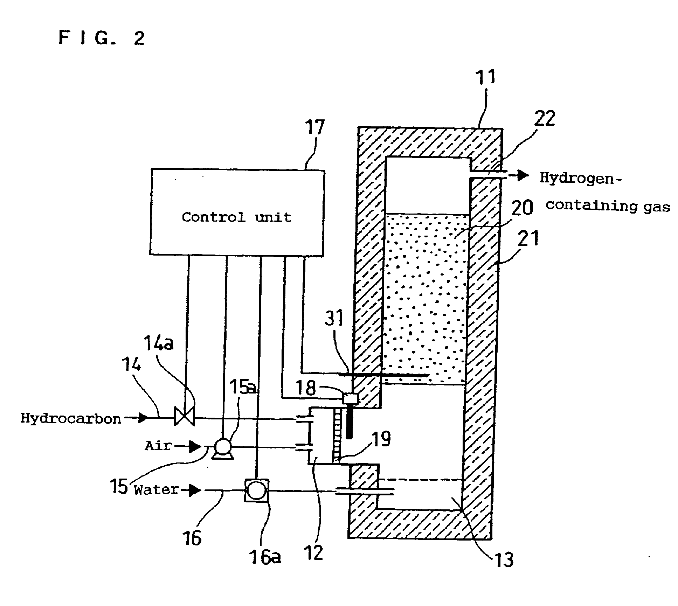

FIG. 2 shows the constitution of a hydrogen producing apparatus in another embodiment of the present invention. Since the constitution of the apparatus as shown in FIG. 2 is almost similar to that of FIG. 1. only the differences will be described. This apparatus is provided with a thermocouple 31 which detects upstream temperature of the catalyst layer and send signals of voltage value to the control unit 17. The operating conditions of this apparatus are the same as those of Embodiment 1. The flow rates of hydrocarbon, air and steam are controlled by the control unit 17. The control unit 17 stores an algebraic expression for calculating the rate of increase in the flow rate of steam from the rate of decrease in the flow rate of hydrocarbon-type fuel on the basis of experiment results. In stopping the operation, the control unit gradually decreases the flow rate of hydrocarbon-type fuel while maintaining the flow rate of air at a constant level; and simultaneously gradually increases the flow rate of steam by successively substituting the rate of decrease in the flow rate of hydrocarbon-type fuel in the expression and using the calculated results as the rate of increase in the flow rate of steam. Further, the control unit 17 successively changes coefficients of the expression depending on the upstream temperature of the catalyst layer. When the upstream temperature of the catalyst layer does not drop, i. e., when it rises or it does not change, the control unit changes coefficients of the expression and thereby exerts control to increase the rate of increase in the flow rate of steam.

As described above, since the changes of the flow rates of hydrocarbon-type fuel and steam are allowed to reflect the upstream temperature of the catalyst layer, this embodiment is effective when fixing the expression would cause inconveniences. For example, in the case of the catalytic activity deteriorating with time after repetition of starting-up the apparatus and stopping the operation over an extended period or in the case of variations in the composition of the hydrocarbon feedstock, if the flow rates are controlled with the expression fixed to the one obtained in an early stage of the operation, the upstream temperature of the catalyst layer may become higher than the temperature in the early stage. The constitution of this embodiment makes it possible to control the flow rate of steam depending on the catalytic activity and reaction state and therefore prevent the temperature of the catalyst layer from rising. The above-mentioned algebraic expression may be, for example, as follows:

$$\Delta (HC) \cdot (aT + bT^2 + cT^3) = \Delta (H_2O)$$

wherein $\Delta (HC)$ represents the amount of change in hydrocarbon-type fuel, $\Delta (H_2O)$ represents the amount of change in steam, and a, b and c are constants.

Embodiment 3

A hydrogen producing apparatus in still another embodiment of the present invention will be explained. Since this embodiment is almost similar to Embodiment 2, only the differences will be described. The control unit 17 is made to store the upper limit of catalyst operating temperature, for example, 900 °C. In stopping the operation, the control unit gradually decreases the flow rate of hydrocarbon-type fuel while maintaining the flow rate of air at a constant level; and simultaneously gradually increases the flow rate of steam by successively substituting the rate of decrease in the flow rate of hydrocarbon-type fuel in the expression and using the calculated results as the rate of increase in the flow rate of steam. Further, the control unit 17 successively changes coefficients of the expression depending on the upstream temperature of the catalyst layer. When the upstream temperature of the catalyst layer has reached the abovementioned 900 °C, the control unit changes coefficients of the expression and thereby increases the rate of increase in the flow rate of steam. Furthermore, it is also possible to exert loop control of the flow rate of steam for adjustment based on the upstream temperature of the catalyst layer; as a result, it is possible, by increasing the rate of increase in the flow rate of steam, to exert control that the temperature does not rise far beyond the upper limit of the operating temperature. The constitution of this embodiment makes it possible to ensure prevention of catalyst deterioration caused by heat in stopping the apparatus.

In the following, examples of stop operation of the apparatus of the present invention will be described with reference to comparative examples.

Example 1

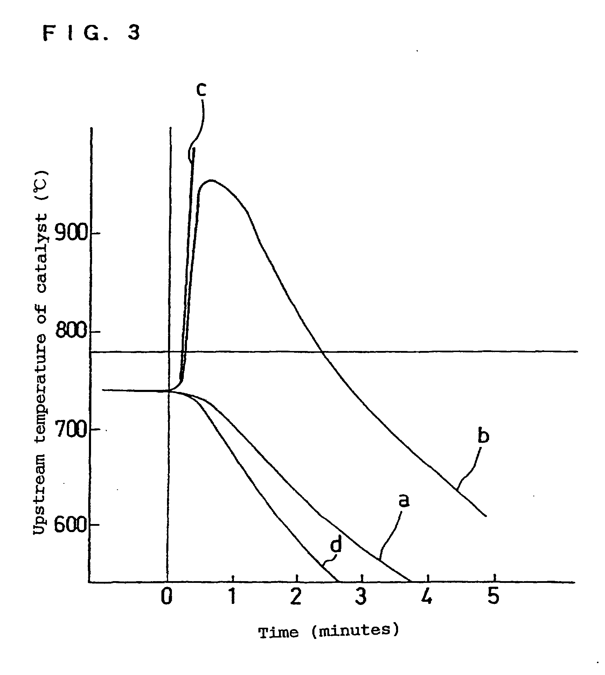

FIG. 3 is a chart showing changes in upstream temperature of catalyst layers. In FIG. 3, the abscissa is the time from the commencement of the stop operation and the ordinate is the upstream temperature of catalyst layers.

From the steady operation as described in Embodiment 1, first, the flow rate of methane was gradually decreased from the steady-state value of 10 L/min in a ratio of 0.2 L/min per second while the flow rate of air was maintained at the steady-state value of 30 L/min, and simultaneously the flow rate of steam was gradually increased from the steady-state value of 10 L/min in a ratio of 0.2 L/min per second. Fifty seconds after the commencement of the stop operation, methane was stopped. Ten seconds after the stop of methane, steam was stopped, and five minutes later, air was stopped. As shown by "a" of FIG. 3, this stop operation successfully stopped the operation without causing an abnormal rise in upstream temperature of the catalyst layer and without affecting the catalyst adversely. Further, since air was supplied even after the stop of methane, this stop operation prevented the flammable gas from remaining inside the apparatus.

Comparative example 1

A stop operation different from that of Example 1 will be described as a comparative example. From the steady operation as described in Embodiment 1, while the flow rates of air and steam were maintained at 30 L/min and 10 L/min, respectively, the flow rate of methane was gradually decreased in the same ratio of 0.2 L/min per second as that of Example 1 and was stopped fifty seconds later. Ten seconds after the stop of methane, steam was stopped, and five minutes later, air was stopped. This stop operation caused a rapid increase in the upstream temperature of the catalyst layer as shown by "b" of FIG. 3. The reason may be as follows: since the amount of oxidation reaction (the amount of combustion) defined by the flow rate of air is maintained while the flow rate of methane is reduced, this will cause an exothermic reaction equivalent to that in the steady operation to proceed in a smaller area than in the steady operation upstream of the catalyst layer over the catalyst. Since the temperature of the catalyst exceeded 900 °C, the limit of the operating temperature, the activity thereof was deteriorated due to sintering of catalyst particles occurring mainly upstream of the catalyst layer. Generally speaking, deterioration in catalytic activity due to such cause is difficult to restore.

Comparative example 2

From the steady operation as described in Embodiment 1, while the flow rate of steam was maintained at the steady-state value, the flow rate of methane was gradually decreased from the steady-state value of 10 L/min in a ratio of 0.2 L/min per second, and simultaneously the flow rate of air was gradually increased from the steady-state value of 30 L/min in a ratio of 0.2 L/min per second. Fifty seconds after the commencement of the stop operation, methane was stopped. Ten seconds after the stop of methane, steam was stopped, and five minutes later, air was stopped. This stop operation also caused a rapid increase in the upstream temperature of the catalyst layer as shown by "c" of FIG. 3. The reason may be as follows: That is, the flow rate of air during the steady operation is low as compared to the rate designed for complete combustion (oxidation reaction) of methane. Since the oxidation reaction has a higher reaction rate than the steam reforming reaction of methane, the amount of oxidation reaction was increased immediately after the commencement of the stop operation by the increase in the flow rate of air, and the exothermic reaction was therefore increased as compared with the steady operation. Since the temperature of the catalyst exceeded, in a larger area, the temperature limit of 900 °C, the activity thereof was deteriorated due to sintering of catalyst particles.

Comparative example 3

From the steady operation as described in Embodiment 1, while the flow rate of methane was maintained at the steady-state value, the flow rate of air was decreased in a ratio of 0.6 L/min per second, and simultaneously the flow rate of steam was increased in a ratio of 0.6 L/min per second, and fifty seconds later, air was stopped. Five minutes after the stop of air, steam was stopped, and ten minutes later, methane was gradually stopped. As shown by "d" of FIG. 3, this stop operation successfully stopped the operation without causing an abnormal temperature rise and without affecting the catalyst adversely. However, methane remained in the apparatus, and if air is introduced for removing the methane, there is a danger that a flammable air-fuel mixture may be produced.

As indicated in the foregoing example and comparative examples, there may be an adverse effect on the catalyst or a danger unless the apparatus is stopped by gradually decreasing the flow rate of methane and simultaneously gradually increasing the flow rate of steam while maintaining the flow rate of air at a constant level.

It is noted that the rate of increase in the flow rate of steam needs to compensate for the rate of decrease in the flow rate of methane. The difference between Example 1 and Comparative example 1 is that the flow rate of steam is raised or maintained at a constant level. In Comparative example 1, the catalyst temperature rose rapidly, presumably because decreasing only the flow rate of methane without increasing the flow rate of steam caused a change in the total flow rate of the gases and the amount of reaction, thereby changing heat balance over the catalyst. The rate of increase in the flow rate of steam is determined by substituting the rate of decrease in the flow rate of hydrocarbon-type fuel in a predetermined expression, and the predetermined expression is determined so as to compensate for such changes. In Example 1, it was determined, as an example, to be equal to the rate of decrease in the flow rate of methane. It is noted, however, that the conditions of this example do not necessarily apply to all cases and may be modified according to conditions such as the amount, material and shape of a catalyst, the thermal capacity, material and shape of an apparatus, the flow rates of gases, etc. for carrying out the invention. For example, the predetermined expression is determined based on experiments with actual apparatuses and simulation, and the control of the flow rates is performed based on the determined expression. It is noted that the control of the flow rates may be performed manually or with the use of the control unit 17.

Example 2

This example examined the optimal reforming catalyst, reforming reaction conditions and desulfurizing agent to be used in a hydrogen producing apparatus having a constitution that sulfur compounds contained in a hydrocarbon-type fuel are desulfurized by a desulfurization unit placed downstream of a reforming section.

First, the durability of the catalyst with respect to the sulfur compounds was tested.

Each one of six (sic) kinds of elements, Pt, Pd, Rh, Ir, Ru, Co, Ni and Cu, was carried on aluminum oxide at 3 wt% to prepare a catalyst. A dinitrodiammine complex salt was used for Pt, and nitrate was used for the other elements.

First, aluminum oxide was impregnated with a solution of a salt of catalyst metal and was thermally decomposed at 500 °C for one hour so that the catalyst was carried. The resultant alumina powder carrying catalyst metal was compression moulded and crushed to form particles of 8 to 15 mesh.

The particles were charged into a quarts tube, and a mixed gas of methane, steam and air was introduced into the quarts tube at a space velocity of 10000h$^{-1}$. The molar ratio of methane/steam/air was 1:3:2.5. Further, tertiary butyl mercaptan (hereinafter referred to as TBM) and dimethyl sulfide (hereinafter referred to as DMS), each being a component of an odorant of city gas, were added thereto each at 2.5 ppm. The quarts tube was inserted into a tubular furnace, and while the temperature of the furnace was maintained at 800 °C, the change with time in the conversion ratio of methane was observed. Before the introduction of the mixed gas, the catalyst was supplied with He containing 10% $H_2$ at 400 °C and at a space velocity of 10000h$^{-1}$ for one hour for reduction by hydrogen. This evaluation is referred to as Experiment 1. The results are shown in Table 1.

Table 1

| Catalyst | Conversion ratio 1 hour after introduction of feedstock gas (%) | Conversion ratio 24 hours after introduction of feedstock gas (%) |
|---|---|---|
| $Pt/Al_2O_3$ | 97.5 | 98.0 |

Table 1   (continued)

| Catalyst | Conversion ratio 1 hour after introduction of feedstock gas (%) | Conversion ratio 24 hours after introduction of feedstock gas (%) |
|---|---|---|
| $Pd/Al_2O_3$ | 79.0 | 54.1 |
| $Rh/Al_2O_3$ | 88.4 | 62.2 |
| $Ir/Al_2O_3$ | 90.7 | 81.6 |
| $Ru/Al_2O_3$ | 59.9 | 33.3 |
| $Co/Al_2O_3$ | 55.2 | 45.5 |
| $Ni/Al_2O_3$ | 68.5 | 46.0 |
| $Cu/Al_2O_3$ | 30.9 | 32.6 |

Table 1 indicates that the catalyst comprising $Al_2O_3$ and Pt carried thereon has higher durability with respect to sulfur compounds than the other catalyst metals.

TBM and DMS in the mixed gas were converted to hydrogen sulfide after they came in contact with the reforming catalyst. Further, the desulfurization unit placed downstream of the reforming section was filled with a desulfurizing agent $V_2O_5$, $Cr_2O_3$, $MnO_2$, $Fe_2O_3$, $Co_2O_3$, NiO, CuO or ZnO having a volume five times that of the reforming catalyst, and while the temperature of the desulfurization unit was held at 400 °C, the desufurization characteristics were examined. As a result, no sulfur component was detected downstream of the desulfurization unit in the case of any desulfurizing agents. Gas chromatography was used to detect the sulfur component. The minimum sensitivity was 0.1 ppm.

With regard to the desulfurizing agent, it was found that zinc oxide had the highest adsorption capacity and was therefore appropriate as the desulfurizing agent. It was found that this enabled desulfurization downstream of the reforming catalyst.

Next, the correlation between the composition of the feedstock gas and the durability of the platinum catalyst with respect to sulfur compounds was examined.

Experiments were conducted under the same conditions as those of Experiment 1 except for changes in molar ratio of feedstock gas methane/water/air. Table 2 shows changes with time in methane conversion ratio when the composition of the mixed gas is varied.

Table 2

| $CH_4$:$H_2O$:Air molar ratio | Conversion ratio 1 hour after introduction of feedstock gas (%) | Conversion ratio 24 hours after introduction of feedstock gas (%) |
|---|---|---|
| 1:3:1 | 60.0 | 49.3 |
| 1:3:2.5 | 97.5 | 98.0 |
| 1:3:3 | 97.7 | 97.5 |
| 1:1:2.5 | 67.0 | 66.4 |
| 1:2:2.5 | 76.9 | 74.2 |
| 1:1:1 | 62.8 | 49.7 |
| 1:3:0 | 55.5 | 40.0 |
| 1:0:3 | 63.5 | 59.8 |

As shown in Table 2, the higher the molar ratios of air and water, the higher the conversion ratio, and the amount of air gave a considerable effect on deterioration of the catalyst. Therefore, in view of the activity, performance deterioration, etc., it is essential that the feedstock gas contain both water and air. Also, in view of the methane conversion ratio and the operating temperature of the catalyst, larger amounts of water and air are more preferable.

Next, the correlation between the catalyst temperature and the durability of the catalyst with respect to sulfur compounds was examined. Using the catalyst comprising $Al_2O_3$ carrying 3 wt% Pt, this examination was conducted in the same manner as in Experiment 1. At this time, the temperature of the electric furnace was varied to six different temperatures of 500 °C, 600 °C, 700 °C, 800 °C, 900 °C and 1000 °C, and the upstream temperature of the catalyst surface was measured. Table 3 shows changes with time in methane conversion ratio when the catalyst temperature is varied.

Table 3

| Temperature of electric furnace (°C) | 1 hour after introduction of feedstock gas | | 24 hours after introduction of feedstock gas | |
|---|---|---|---|---|
| | Conversion ratio (%) | Catalyst temperature(°C) | Conversion ratio (%) | Catalyst temperature(°C) |
| 500 | 48.4 | 576 | 10.4 | 581 |
| 600 | 80.0 | 599 | 58.8 | 624 |
| 700 | 91.7 | 617 | 91.7 | 620 |
| 800 | 97.5 | 677 | 98.0 | 678 |
| 900 | 98.5 | 750 | 97.9 | 775 |
| 1000 | 90.2 | 861 | 59.3 | 912 |

As shown in FIG. 3, when the catalyst temperature was in a range of 600 to 800 °C, the conversion ratio remained high and the catalyst deterioration was also suppressed.

Next, the effect of the catalyst carrier on the durability of the platinum catalyst with respect to sulfur compounds was examined. Five kinds of carriers, $Al_2O_3$, $TiO_2$, $ZrO_2$, MgO and $SiO_2$-$Al_2O_3$, were used and were thermally treated in the air at 1000 °C for one hour. Using these carriers, experiments were conducted under the same conditions as those of Experiment 1, and the changes with time in methane conversion ratio are shown in Table 4.

Table 4

| Carrier | Conversion ratio 1 hour after introduction of feedstock gas (%) | Conversion ratio 24 hours after introduction of feedstock gas (%) |
|---|---|---|
| $Al_2O_3$ | 97.5 | 98.0 |
| $TiO_2$ | 72.2 | 68.1 |
| $ZrO_2$ | 99.0 | 98.9 |
| MgO | 83.9 | 80.5 |
| $SiO_2$-$Al_2O_3$ | 74.6 | 51.4 |

As shown in Table 4, only $Al_2O_3$ and $ZrO_2$ allow the catalyst to have high durability with respect to sulfur compounds. A highly acidic carrier such as $SiO_2$-$Al_2O_3$ invited considerable deposition of coke, and carriers having a low specific surface area and therefore poor dispersion of the catalyst metal such as $TiO_2$ and MgO also exhibited poor durability.

In contrast, $Al_2O_3$ having a high specific surface area and high dispersion exhibited high durability, and $ZrO_2$ also exhibited high durability although it has a low specific surface area and low dispersion. Stabilized zirconia $ZrO_2$ to which a rare-earth element was introduced also exhibited a similar tendency.

Industrial Applicability

As described above, the present invention is free from deactivation of a catalyst caused by a rapid increase in the temperature of the catalyst beyond the limit of thermal resistance in stopping the operation. Therefore, it is possible to stop a hydrogen producing apparatus without giving an adverse effect on the catalyst and in a safe manner. Further, since there is no residual hydrocarbon-type fuel inside the apparatus after stopping the operation, it is possible to secure safety.

In the foregoing examples, methane was used as the hydrocarbon-type fuel, but other hydrocarbon-type fuels may be used or hydrocarbon component content may differ. Disclosed values and ratios of the flow rates are just examples, and modifications thereof may be possible. For example, city gas, LPG or the like may have different components from region to region. In this case, the flow rates of the above-described gases may be modified as appropriate. Platinum group metals were used as the catalyst, but there is no limitation thereto.

In the case of a problem of sulfur poisoning arising depending on the kind of a catalyst material, the hydrocarbon-type fuel supply unit may be provided, as appropriate, with a desulfurizing unit or the like. However, as described in Example 2, the present invention performs reforming at high temperatures in the co-presence of water and air with the use of a reforming catalyst comprising platinum having high durability with respect to sulfur compounds, and this makes it possible to realize a hydrogen producing apparatus having a desulfurizing unit arranged downstream of a reforming catalyst. This allows exhaust heat of a reforming section and heat of a CO shifting section to become available for desulfurization and therefore enables reduction in the size of the desulfurization unit in comparison with the desulfurization unit comprising a zeolite-type adsorbent.

**Claims**

1. A method of operating a hydrogen producing apparatus for a fuel cell power generation system, said apparatus producing a hydrogen-containing gas by catalytic reaction among feedstocks comprising at least a hydrocarbon-type fuel, water and an oxygen-containing oxidant gas, said method comprising, in stopping operation of the apparatus, the steps of: decreasing the flow rate of the hydrocarbon-type fuel and simultaneously increasing the flow rate of the water while maintaining the flow rate of the oxidant gas at a constant level; stopping supply of the hydrocarbon-type fuel; and thereafter stopping supply of the water and the oxidant gas.

2. A hydrogen producing apparatus comprising: a reformer comprising a reforming catalyst layer, a pre-mixing chamber and a vaporizing chamber, each chamber being provided upstream of the reforming catalyst layer; a supply unit of a hydrocarbon-type fuel and a supply unit of an oxygen-containing oxidant gas, each unit having a flow rate adjusting device and being connected to said pre-mixing chamber; a supply unit of water having a flow rate adjusting device and being connected to said vaporizing chamber; and a control unit for controlling the respective flow rate adjusting devices, wherein in stopping operation of the apparatus, said control unit controls said respective flow rate adjusting devices in a procedure comprising the steps of: decreasing the flow rate of the hydrocarbon-type fuel and simultaneously increasing the flow rate of the water while maintaining the flow rate of the oxidant gas at a constant level; stopping supply of the hydrocarbon-type fuel; and thereafter stopping supply of the water and the oxidant gas.

3. The hydrogen producing apparatus in accordance with claim 2, further comprising a temperature detector for detecting upstream temperature of said catalyst layer, wherein said control unit exerts such control, in stopping the operation of the apparatus, as to increase the rate of increase in the flow rate of the water when the temperature detected by said temperature detector does not decrease.

4. The hydrogen producing apparatus in accordance with claim 2, further comprising a temperature detector for detecting upstream temperature of said catalyst layer, wherein said control unit exerts such control, in stopping the operation of the apparatus, as to increase the rate of increase in the flow rate of the water when the temperature detected by said temperature detector has reached a predetermined upper limit.

5. The hydrogen producing apparatus in accordance with claim 2, wherein said catalyst layer comprises at least platinum, and a desulfurization unit comprising an oxide of at least one metal selected from the group consisting of V, Cr, Mn, Fe, Co, Ni, Cu and Zn as a desulfurizing agent is provided downstream of the reformer.

6. The hydrogen producing apparatus in accordance with claim 2, wherein the catalyst is supported on a carrier which comprises at least one of zirconium oxide and aluminum oxide, and reforming reaction is operated while the temperature of said catalyst layer is held at 600 to 800 °C.

7. The hydrogen producing apparatus in accordance with claim 5, wherein said desulfurizing agent is at least one selected from the group consisting of $V_2O_5$, $Cr_2O_3$, $MnO_2$, $Fe_2O_3$, $Co_2O_3$, NiO, CuO and ZnO.

F I G. 1

F I G. 2

Control unit

17

11

22

Hydrogen-containing gas

20

21

31

14a

14

15a

18

Hydrocarbon →

Air →

19

15 Water →

16

16a

12

13

F I G. 3

## INTERNATIONAL SEARCH REPORT

| International application No. |
|---|
| PCT/JP01/02375 |

### A. CLASSIFICATION OF SUBJECT MATTER
Int.Cl[7]   H01M8/04, H01M8/06, C01B3/38

According to International Patent Classification (IPC) or to both national classification and IPC

### B. FIELDS SEARCHED

Minimum documentation searched (classification system followed by classification symbols)
Int.Cl[7]   H01M8/04, H01M8/06, C01B3/38

Documentation searched other than minimum documentation to the extent that such documents are included in the fields searched
Jitsuyo Shinan Koho          1926-1996      Toroku Jitsuyo Shinan Koho   1994-2001
Kokai Jitsuyo Shinan Koho    1971-2001      Jitsuyo Shinan Toroku Koho   1996-2001

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP, 2-132766, A (Yamaha Motor Co., Ltd.), 22 May, 1990 (22.05.90), Claims   (Family: none) | 1-7 |
| A | JP, 2000-63104, A (Honda Motor Co., Ltd.), 29 February, 2000 (29.02.00), Claims   (Family: none) | 1-7 |
| EA | JP, 2001-158602, A (Honda Motor Co., Ltd.), 12 June, 2001 (12.06.01), Claims   (Family: none) | 1-7 |
| PA | JP, 2000-95504, A (Matsushita Electric Works, Ltd.), 04 April, 2000 (04.04.00), Claims   (Family: none) | 1-7 |

☐ Further documents are listed in the continuation of Box C.      ☐ See patent family annex.

| * | Special categories of cited documents: | "T" | later document published after the international filing date or |
|---|---|---|---|
| "A" | document defining the general state of the art which is not considered to be of particular relevance | | priority date and not in conflict with the application but cited to understand the principle or theory underlying the invention |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June, 2001 (19.06.01) | 03 July, 2001 (03.07.01) |

| Name and mailing address of the ISA/ Japanese Patent Office | Authorized officer |
|---|---|
| Facsimile No. | Telephone No. |

Form PCT/ISA/210 (second sheet) (July 1992)